# EUROPÄISCHE PATENTSCHRIFT

(11) **EP 1 159 195 B1**
(45) Veröffentlichungstag und Bekanntmachung des Hinweises auf die Patenterteilung: **28.05.2003**
(21) Anmeldenummer: 00916897.2
(22) Anmeldetag: 03.03.2000
(51) Int. Cl.: B64F 1/305

(54) **FLUGGASTBRÜCKENKABINE**
CABIN FOR A TELESCOPIC GANGWAY
CABINE DE PASSERELLE POUR LES PASSAGERS D'UN AVION

(30) Priorität: 17.03.1999 DE 19911879
(43) Veröffentlichungstag der Anmeldung: 05.12.2001
(73) Patentinhaber: Thyssen Henschel Airport Systems GmbH, 34127 Kassel (DE)
(72) Erfinder: WORPENBERG, Friedhelm, D-34128 Kassel (DE); SCHARF, Lothar, D-37242 Bad Soden-Allendorf (DE)
(74) Vertreter: Dahlkamp, Heinrich-Leopold, Dipl.-Ing.
(86) Internationale Anmeldenummer: EP0001839
(87) Internationale Veröffentlichungsnummer: WO00055038

(56) Entgegenhaltungen:
- WO-A-99/50143
- US-A- 3 121 243
- US-A- 5 761 757

## Beschreibung

Die Erfindung betrifft eine Fluggastbrückenkabine mit einem Vordach und einem sich über die gesamte Breite des Vordaches erstreckenden Boden.

Eine Fluggastbrückenkabine gemäß dem Oberbegriff des Anspruchs 1 ist aus der US 5,761,757 bekannt.

Derartige Fluggastbrückenkabinen sind in verschiedenen Ausführungen bekannt. Sie werden an übliche Verkehrsflugzeuge angedockt, deren Türen sich um im Wesentlichen vertikale Achsen verschwenken und damit öffnen lassen.

Daneben gibt es sogenannte Commuter-Flugzeuge, deren Türen im unteren Bereich an horizontale Achsen angelenkt und zum Öffnen nach außen geschwenkt werden, bis ihre Oberkante den Boden erreicht. Innenseitig sind diese Türen mit einer Treppe versehen, sodass sie auch ohne Fluggastbrücke abgefertigt werden können. Die Treppe kann ein oder zwei Geländer aufweisen.

Eine bekannte Fluggastbrückenkabine der eingangs beschriebenen Gattung (US 3,121,243) kann auch zum Abfertigen von Commuter-Flugzeugen eingesetzt werden. Dazu darf allerdings die freie Stirnseite des Bodens nicht bis unmittelbar an das Flugzeug herangeführt werden, sondern muss wegen der ausgeschwenkten Treppe in einigem Abstand von dem Flugzeug verbleiben. Über die verbleibende Lücke wird eine Übergangsrampe gelegt.

Bei einer bekannten Ausführung (US 5,761,757) ist der Boden unter dem Vordach geteilt, wobei sich ein beweglicher Teil des Bodens unter den feststehenden Teil des Bodens schieben lässt. Zwar lässt sich der Boden dieser Fluggastbrückenkabine bis unmittelbar an das Flugzeug heranführen, wo er mit einer Anlegeschwelle (Bumper) abgestützt wird, beim Andocken an ein Commuter-Flugzeug muss aber auch der im Bereich des beweglichen Teils des Bodens befindliche Abschnitt der Anlegeschwelle aus dem Bereich der vom beweglichen Bodenteil gebildeten Lücke entfernt werden. Das alles ist konstruktiv und funktionell aufwendig.

Aus der DE 15 31 482 A ist darüber hinaus das Anschlußende einer Zugangsbrücke zu Flugzeugen bekannt, wobei der Boden aus einem fest mit der Brücke verbundenen und einem beweglichen Teil besteht, der etwa in der Mitte des freien Bodenrandes am festen Bodenteil um eine lotrechte Achse schwenkbar angelenkt ist und diesen teilweise untergreift.

Aufgabe der Erfindung ist es, eine Fluggastbrückenkabine anzugeben, die zum Andocken sowohl an herkömmliche Verkehrsflugzeuge als auch an Commuter-Flugzeuge geeignet ist.

Diese Aufgabe wird dadurch gelöst, dass der ungeteilte Boden zusammen mit dem Geländer quer zur Öffnung des Vordaches unter dessen Seitenwand, vorzugsweise über die gesamte Öffnung des Vordaches verschiebbar ist. Eine solche Fluggastbrückenkabine kann an übliche Verkehrsflugzeuge mit eingefahrenem Boden, der sich von einer Seite bis zur anderen Seite des Vordaches erstreckt, angedockt werden. Soll die Fluggastbrückenkabine an ein Commuter-Flugzeug angedockt werden, dann wird der Boden seitlich bis in eine Endstellung ausgefahren und wird dann die Fluggastbrückenkabine so an das Commuter-Flugzeug herangefahren, dass dessen offene Tür mit der Treppe und gegebenenfalls dem Geländer in die vom ausgefahrenen Boden freigegebene Lücke gelangt. Dann wird der ausgefahrene Boden soweit wieder eingefahren, bis er sich vor der Türöffnung des Commuter-Flugzeugs bzw. sein Geländer sich neben dem Geländer der Flugzeugtreppe befindet.

In konstruktiver Hinsicht ist eine bevorzugte Ausführung dadurch gekennzeichnet, dass der Boden unterseitig zwei sich quer zur Öffnung des Vordaches erstreckende Laufschienen für darin eingreifende Tragrollen aufweist, die an Tragholmen der Brückenkonstruktion gelagert sind. Dabei sollte bei eingefahrenem Boden einer der Tragholme etwa mittig unter dem Boden und ein weiterer Tragholm im Bereich des seitlichen geländerfreien Randes des Bodens angeordnet sein. Die Führung des Bodens auf Tragrollen ermöglicht eine einfache Verschiebung des Bodens, gegebenenfalls auch von Hand.

Es besteht aber auch die Möglichkeit, dem Boden einen Antrieb zum seitlichen Verschieben zuzuordnen. Dieser Antrieb kann mechanischer, hydraulischer oder auch elektrischer Bauart sein. Bei einer bevorzugten Ausführung der Erfindung ist als Antrieb ein an einem Tragholm befestigter Motor vorgesehen, der mit einem Ritzel in eine Rollenkette eingreift, deren beide Enden im Bereich der seitlichen Ränder des Bodens befestigt sind. Insbesondere kann wenigstens ein Ende der Rollenkette mit einer Spannschraube gehalten sein.

Im Bereich der Enden der Rollenkette können Endlagenschalter für den Antrieb oder auch Anschläge zur Wegbegrenzung des Bodens vorgesehen sein. Ferner kann zwischen dem Motor und dem Ritzel eine Rutschkupplung zur Drehmomentbegrenzung angeordnet sein.

Zum Andocken an Commuter-Flugzeuge, deren innenseitig an der Tür vorgesehene Treppe beidseitig Geländer aufweist, kann eine Übergangsrampe zum Abdecken der neben dem seitlich verschobenen Boden unter dem Vordach gebildeten Öffnung vorgesehen werden. Vorzugsweise kann diese Übergangsrampe außen am Geländer des Bodens ausklappbar angeordnet sein.

Weil der Boden als Ganzes quer zur Öffnung des Vordaches verschiebbar ist, kann auch vor der freien Stirnseite des Bodens eine durchgehende Anlegeschwelle (Bumper) aus einem Profil mit dreieckförmigem Querschnitt angeordnet sein. Es versteht sich, dass diese Anlegeschwelle aus einem nachgiebigen, elastischen Material besteht. Der dreieckige Querschnitt passt sich leicht allen Gegebenheiten an und ermöglicht einen fugenlosen Übergang zwischen dem Boden der Fluggastbrückenkabine und dem Boden im Flugzeug.

Damit dieser Übergang auch beim Andocken einer parallel zum Flugzeug verlaufenden und zudem extrem (1:10) geneigten Fluggastbrücke für die Passagiere komfortabel und unfallsicher bleibt, sollte dies mit einer besonderen Ausführungsform in Gestalt eines zusätzlich auch horizontal nachgeführten Kabinenbodens ermöglicht werden. Bei dieser Ausführung werden die vorerwähnten Tragholme zu einem Tragrahmen erweitert, der etwa auf Kabinenmitte gelenkig mit einem an der Kabine angebrachten Kragträger verbunden ist und mittels eines Verstellantriebes um eine insbesondere waagerechte Drehachse verschwenkt und soweit nachgeführt werden kann, daß der auf diesem Tragrahmen seitlich verschiebbare Kabinenboden in eine dem Flugzeugboden entsprechende horizontale Lage kommt. Am Übergang vom horizontalen Kabinenboden zum (1:10) geneigten Boden der Fluggastbrücke sind dreieckförmige Rampen vorgesehen, die jeweils mittels Scharnieren am Tragrahmen bzw. am Boden der Fluggastbrücke befestigt sind.

Im folgenden werden in der Zeichnung dargestellte Ausführungsbeispiele der Erfindung erläutert; es zeigen:
- Fig. 1: schematisch und in perspektivischer Darstellung eine Ansicht schräg von oben auf eine Fluggastbrückenkabine,
- Fig. 2: den Gegenstand nach Fig. 1 in einer Ansicht schräg von unten,
- Fig. 3: schematisch und in perspektivischer Darstellung eine Übergangsrampe,
- Fig. 4: schematisch und in perspektivischer Darstellung eine an ein herkömmliches Verkehrsflugzeug angedockte Fluggastbrückenkabine,
- Fig. 5: den Gegenstand nach Fig. 4, angedockt an ein Commuter-Flugzeug,
- Fig. 6: den Gegenstand nach Fig. 5, angedockt an ein anderes Commuter-Flugzeug
- Fig. 7: teilweise einen Querschnitt durch den Boden mit einer davor angeordneten Anlegeschwelle.
- Fig. 8: schematisch und in perspektivischer Darstellung eine Ansicht schräg von oben auf eine Fluggastbrückenkabine mit einem nicht nur seitlich verschiebbaren, sondern zusätzlich auch horizontal nachführbaren Kabinenboden.
- Fig. 9: den Gegenstand nach Fig. 8 in einer Ansicht schräg von unten.
- Fig. 10: den Gegenstand nach Fig. 8, angedockt an ein Commuter-Flugzeug.
- Fig. 11: den Gegenstand nach Fig. 8, angedockt an ein Commuter-Flugzeug mit herausgehobener Darstellung der Situation bei einer im Verhältnis 1:10 geneigten Fluggastbrücke.

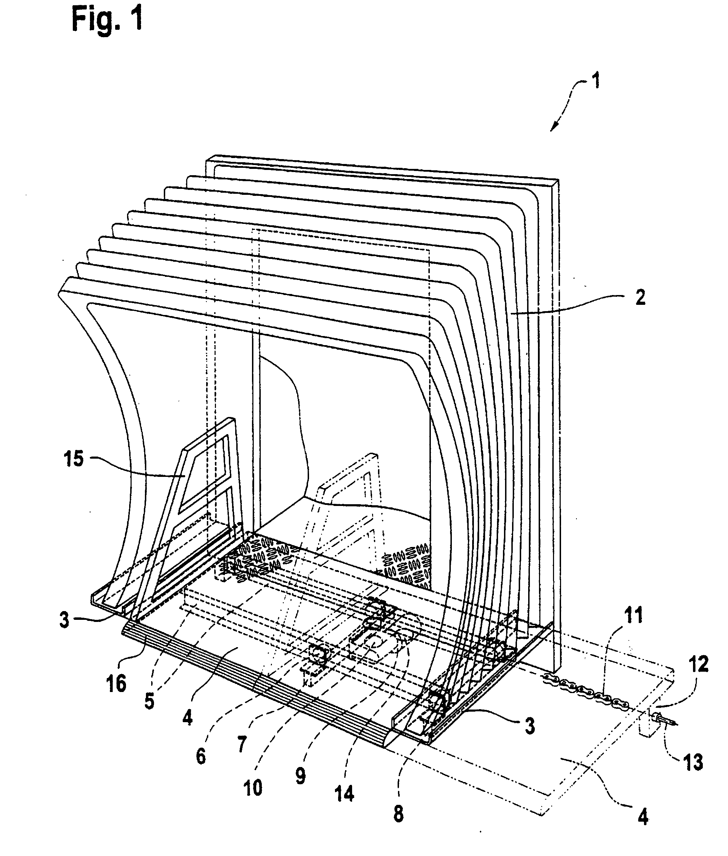

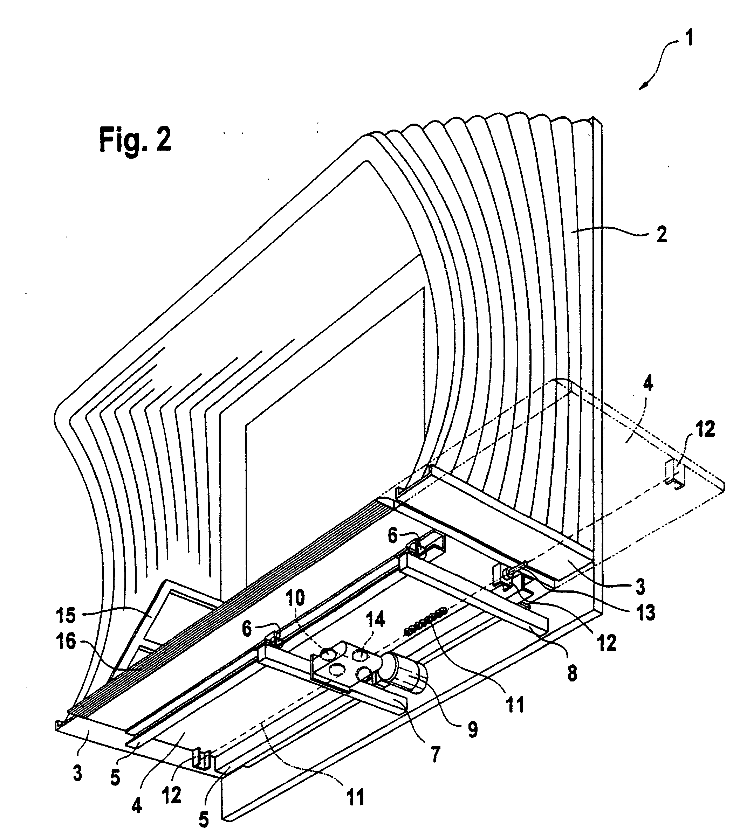

Zu der in Fig. 1 und 2 dargestellten Fluggastbrückenkabine gehört ein Vordach 1 mit gewellter Seitenwand. Die Seitenwände 2 sind an ihren unteren Enden auf Trägern 3 abgestützt, die an die Konstruktion der im einzelnen nicht dargestellten Fluggastbrücke angeschlossen sind. Zwischen den Seitenwänden 2 des Vordachs 1 erstreckt sich ein durchgehender, ungeteilter Boden 4, dessen Oberseite etwas unterhalb der Unterseite der Träger 3 angeordnet ist. An der Unterseite des Bodens 4 befinden sich zwei zueinander parallele und mit gegenseitigem Abstand angeordnete Laufschienen 5 mit bei der dargestellten Ausführung U-förmigem Querschnitt, die sich quer zur Öffnung des Vordaches 1 erstrecken. In die Laufschienen 5 greifen Tragrollen 6 ein, die an Tragholmen 7,8 der Brückenkonstruktion gelagert sind. Bei eingefahrenem Boden 4 befindet sich der Tragholm 7 etwa mittig unter dem Boden 4 und der andere Tragholm 8 ist im Bereich des seitlichen Randes des Bodens 4 angeordnet.

Am Tragholm 7 ist ein Elektromotor 9 befestigt, der mit einem Ritzel 10 in eine Rollenkette 11 eingreift, die sich parallel zu den Laufschienen 5 erstreckt und deren beide Enden im Bereich der seitlichen Ränder des Bodens 4 an Konsolen 12 befestigt sind. Im Bereich des Ritzels 10 läuft die Rollenkette 11 über Umlenkrollen 14. Mit Hilfe dieses Antriebs kann der Boden 4 als Ganzes quer zur Öffnung des Vordaches 1 bewegt werden. In den Figuren 1 und 2 ist mit ausgezogenen Linien der sich zwischen den beiden Seitenwänden 2 des Vordaches 1 erstreckende Boden 4 wiedergegeben. Mit strichpunktierten Linien ist der ausgefahrene Boden wiedergegeben, der dann eine in den Figuren 1 und 2 nicht erkennbare Öffnung unter dem Vordach 1 freigibt.

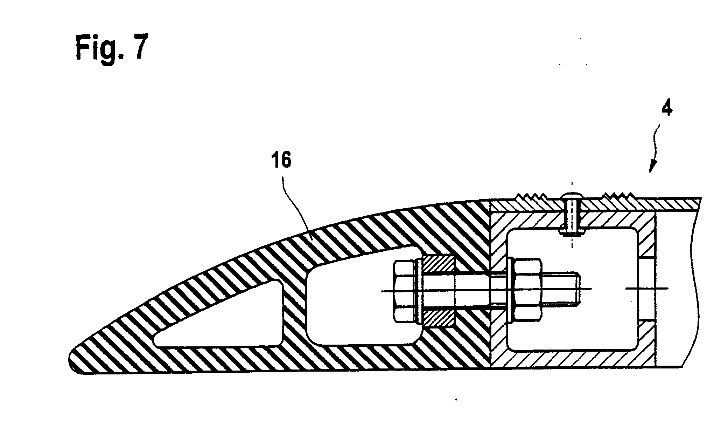

In den Figuren 1 und 2 ist noch dargestellt, dass der Boden 4 im Bereich seines stets unter dem Vordach 1 bleibenden seitlichen Randes ein Geländer 15 trägt, das je nach Erfordernis auch herausgenommen werden kann. Vor der Stimseite des Bodens 4 ist eine durchgehende Anlegeschwelle (Bumper) 16 aus einem Profil mit dreieckförmigem Querschnitt, wie in Fig. 7 dargestellt, und aus nachgiebig elastischem Material angeordnet.

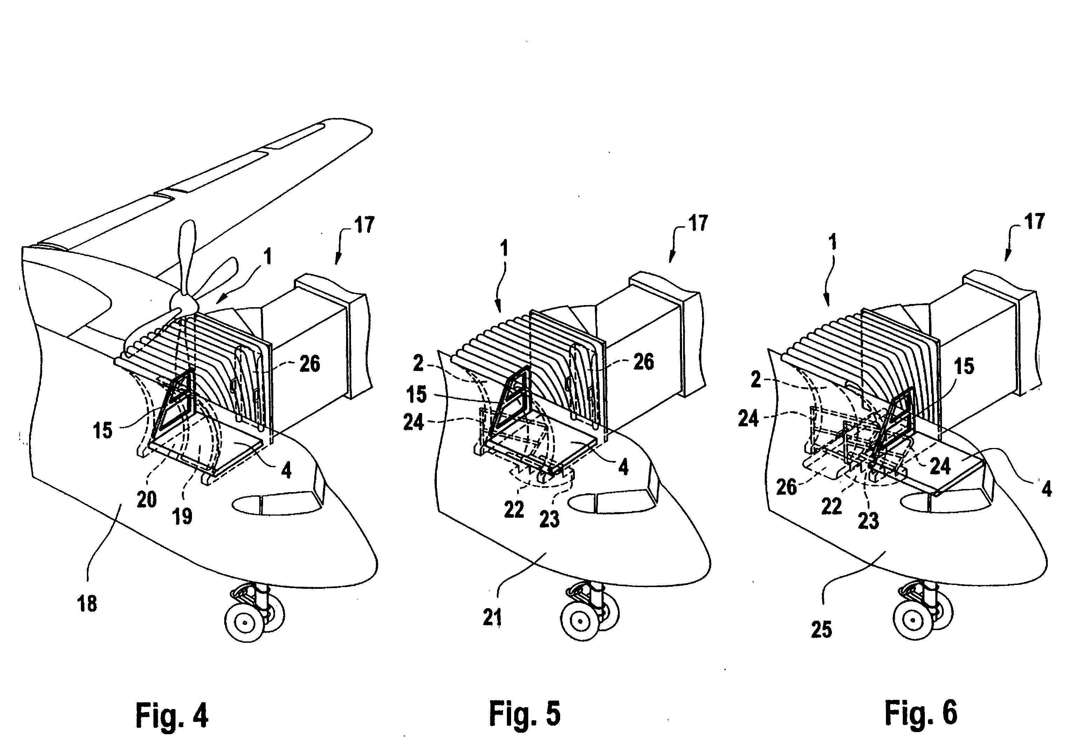

In Fig. 4 erkennt man, wie die an eine Fluggastbrücke 17 angeschlossene Fluggastbrückenkabine an ein Verkehrsflugzeug 18 angedockt ist, dessen seitlich wegschwenkbare Tür 19 eine Einstiegöffnung 20 freigibt. Der mit dicken Linien ausgezogene Boden 4 mit Geländer 15 erstreckt sich zwischen den Seitenwänden 2 des Vordaches 1.

Fig. 5 erläutert das Andocken an ein Commuter-Flugzeug 21, dessen nach unten aufschwenkbare Tür 22 innenseitig mit einer Treppe 23 und einem einseitigen Geländer 24 ausgerüstet ist. Vor dem Andocken wird der Boden 4 mit seinem Geländer 15 seitlich ausgefahren und wird dann die Fluggastbrückenkabine so an das Commuter-Flugzeug angedockt, dass das Flugzeug eigene Geländer 24 sich dicht neben einer Wandseite 2 des Vordaches 1 befindet. Dann wird der Boden 4 mit dem Geländer 15 wieder eingefahren, bis die beiden Geländer 15 und 24 sich dicht nebeneinander befinden und die Türöffnung des Commuter-Flugzeuges 21 frei zugänglich ist.

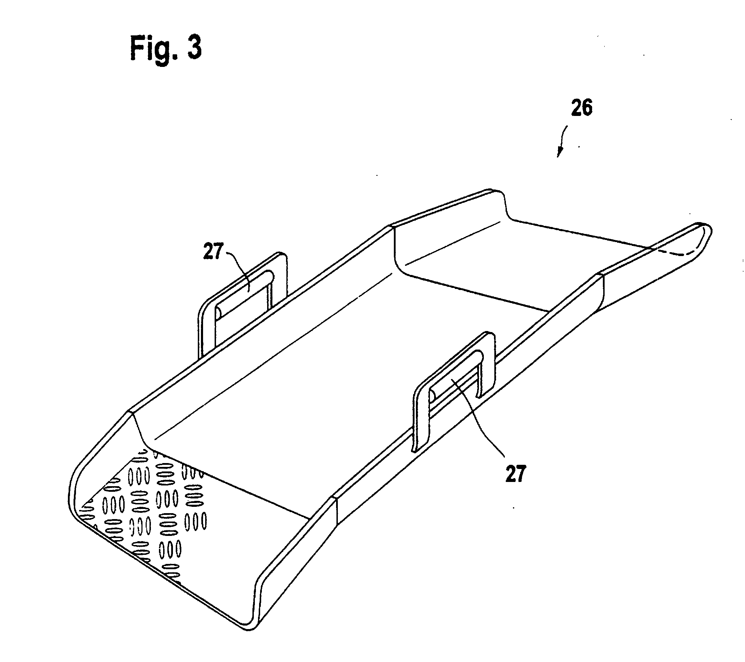

Fig. 6 gibt das Andocken an ein anderes Commuter-Flugzeug 25 wieder, dessen an der Innenseite der Tür 22 angeordnete Treppe auf beiden Seiten Geländer 24 aufweist. Zum Andocken wird der Boden 4 mit seinem Geländer 15 wiederum seitlich so weit ausgefahren, dass die Treppe 23 mit den beidseitigen Geländern 24 in die Lücke zwischen der Seitenwand 2 und dem Geländer 15 eingreifen kann. Dann wird eine Übergangsrampe 26 über die neben dem seitlich verschobenen Boden 4 unter dem Vordach 1 gebildete Öffnung gelegt, um den Zugang zum Commuter-Flugzeug 25 zu ermöglichen. Eine derartige Übergangsrampe ist in Fig. 3 dargestellt. Bei der in Fig. 3 dargestellten Ausführung besitzt die Übergangsrampe 26 seitliche Handgriffe 27. Bei einer anderen, nicht dargestellten Ausführung ist die Übergangsrampe 26 außen am Geländer 15 des Bodens 4 ausklappbar angeordnet.

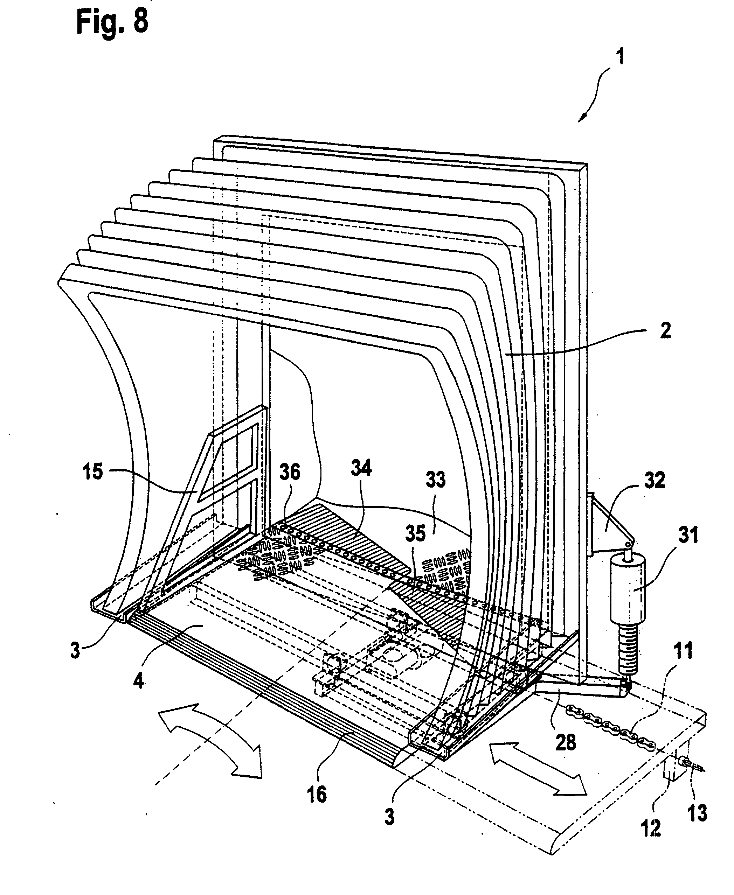

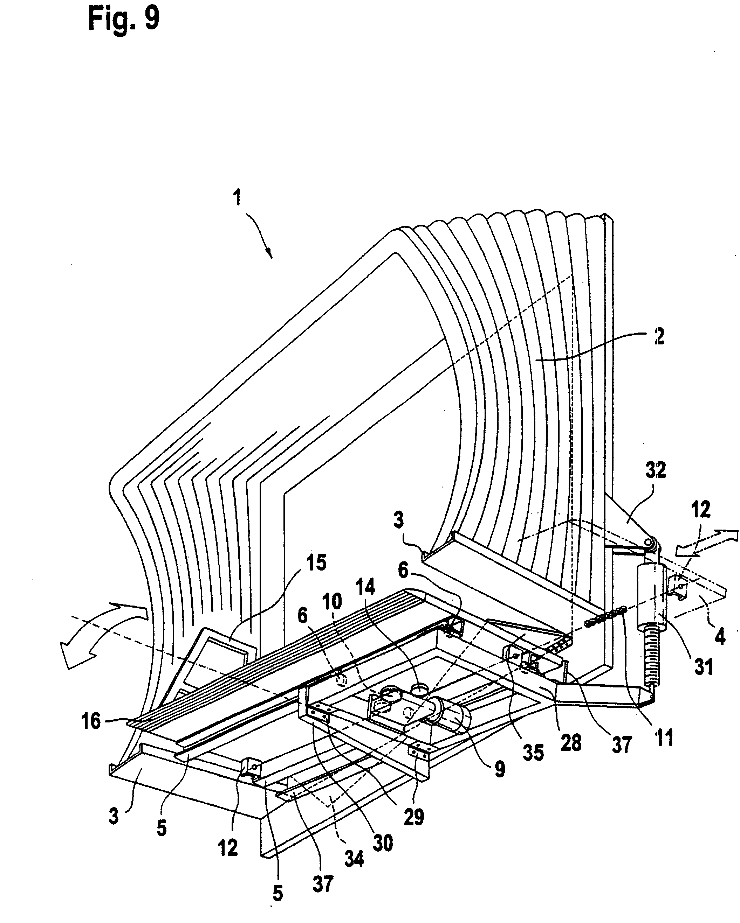

Die in Fig. 8 und 9 dargestellte Fluggastbrückenkabine unterscheidet sich von der vorbeschriebenen im wesentlichen durch folgende Merkmale;

Der seitlich verschiebbare Boden 4 mit seinen beiden Laufschienen 5 stützt sich über Tragrollen 6 auf einem Tragrahmen 28 ab, der mittels Scharnieren 29 einerseits an dem etwa auf Kabinenmitte angeordneten Kragträger 30 gelenkig befestigt und andererseits über einen Verstellantrieb 31 und eine Konsole 32 an der Fluggastbrückenkabine ebenfalls gelenkig befestigt ist. Mit dem Verstellantrieb 31 kann der Boden 4 soweit riachgeführt werden, daß er auch bei extrem (1:10) geneigter Fluggastbrücke 17 in eine dem Flugzeugboden entsprechende horizontale Lage kommt. Am Übergang vom horizontalen Boden 4 zum geneigten Boden 33 der Fluggastbrücke 17 sind dreieckförmige Rampen 34 und 35 vorgesehen, die jeweils mittels Scharnieren 36 am Tragrahmen 28 bzw. am Boden der Fluggastbrücke 33 befestigt sind, wobei zu diesem Zweck der Tragrahmen 28 mit einem über die ganze Breite des Bodens 4 reichenden Tragwinkel 37 versehen ist. Die seitliche Verschiebbarkeit des Bodens 4 erfolgt in gleicher Weise und mit den gleichen Mitteln, wie dies ausführlich in der mit den Fig. 1 und 2 dokumentierten Fluggastbrückenkabine beschrieben ist.

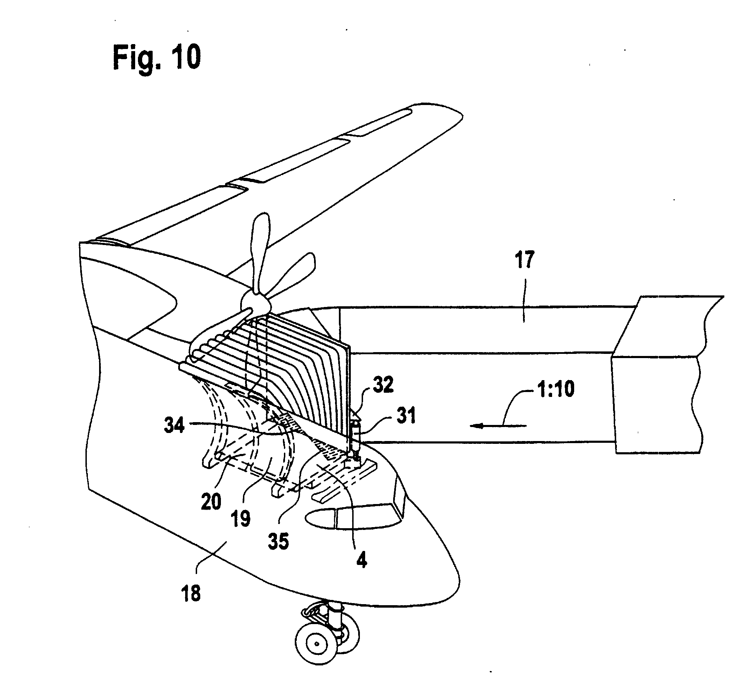

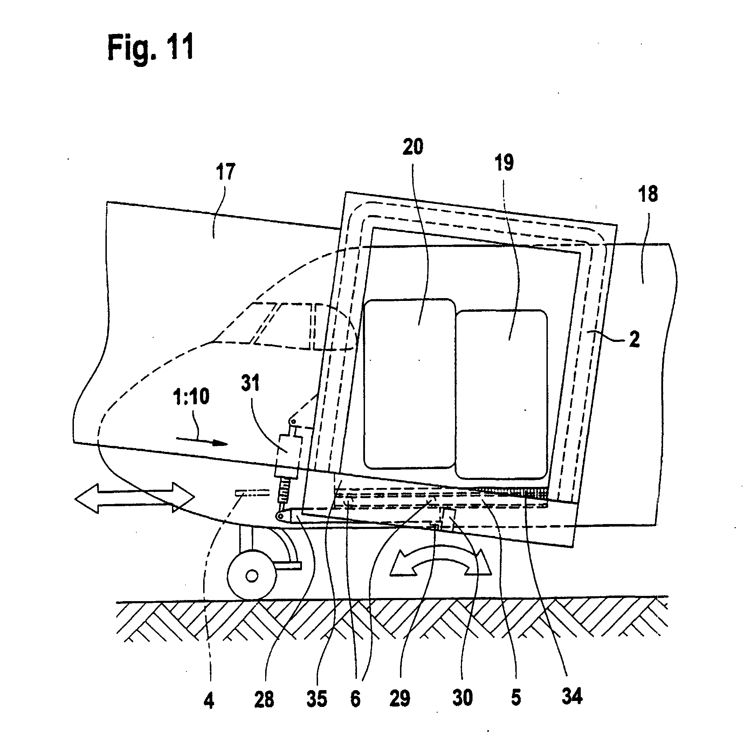

Fig. 10 und 11 zeigen die Situation bei der Abfertigung eines Commuter-Flugzeuges 18 mit einer nahezu parallel zum Flugzeug angedockten, extrem geneigten Fluggastbrücke 17, wobei nach Fig. 11 der Boden 4 mit Hilfe des Verstellantriebes 31 um eine im wesentlichen waagerechte Drehachse im Bereich der Scharniere 29 in eine Lage parallel zum Flugzeugboden gebracht worden ist. Entsprechend Fig. 10 sind die dreieckigen Rampen 34 und 35 einseitig gelenkig am Boden 4 befestigt und überdecken die durch das Verschwenken des Kabinenbodens entstehenden dreieckförmigen Öffnungen zwischen Kabinenboden 4 und Boden 33 der geneigten Fluggastbrücke.

### Bezugszeichenliste:

- 1: Vordach
- 2: Seitenwand von 1
- 3: Träger
- 4: Boden
- 5: Laufschienen
- 6: Tragrollen
- 7: Tragholm
- 8: Tragholm
- 9: Elektromotor
- 10: Ritzel
- 11: Rollenkette
- 12: Konsolen
- 13: Spannschraube
- 14: Umlenkrollen
- 15: Geländer
- 16: Anlegeschwelle
- 17: Fluggastbrücke
- 18: Verkehrsflugzeug
- 19: Tür
- 20: Einstiegöffnung
- 21: Commuter-Flugzeug
- 22: Tür
- 23: Treppe
- 24: Geländer
- 25: Commuter-Flugzeug
- 26: Übergangsrampe
- 27: Handgriffe an 26
- 28: Tragrahmen
- 29: Scharnier
- 30: Kragträger
- 31: Verstellantrieb
- 32: Konsole
- 33: Boden der Fluggastbrücke
- 34: Rampe
- 35: Rampe
- 36: Scharnier an 34, 35
- 37: Tragwinkel an 28

## Patentansprüche

1. Fluggastbrückenkabine mit einem Vordach (1) und einem sich über die gesamte Breite des Vordaches (1) erstreckenden Boden (4), der im Bereich eines seitlichen Randes ein Geländer (15) aufweist, **dadurch gekennzeichnet, dass** der Boden (4) ungeteilt ist und zusammen mit dem Geländer (15) quer zur Öffnung des Vordaches (1) unter dessen Seitenwand (2) verschiebbar ist.

2. Fluggastbrückenkabine nach Anspruch 1, **dadurch gekennzeichnet, dass** der Boden (4) unterseitig zumindest zwei sich quer zur Öffnung des Vordaches (1) erstreckende Laufschienen (5) für darin eingreifende Tragrollen (6) aufweist, die an Tragholmen (7,8) der Brückenkonstruktion lagerbar sind.

3. Fluggastbrückenkabine nach Anspruch 2, **dadurch gekennzeichnet, dass** bei eingefahrenem Boden (4) einer der Tragholme (7) etwa mittig unter dem Boden (4) und ein weiterer Tragholm (8) im Bereich des seitlichen geländerfreien Randes des Bodens (4) angeordnet sind.

4. Fluggastbrückenkabine nach Anspruch 1, **dadurch gekennzeichnet, dass** dem Boden (4) ein Antrieb zum seitlichen Verschieben zugeordnet ist.

5. Fluggastbrückenkabine nach Anspruch 4, **dadurch gekennzeichnet, dass** als Antrieb ein an einem Tragholm (7) befestiger Motor (9) vorgesehen ist, der mit einem Ritzel (10) in eine Rollenkette (11) eingreift, deren beide Enden im Bereich der seitlichen Ränder des Bodens (4) befestigt sind.

6. Fluggastbrückenkabine nach Anspruch 5, **dadurch gekennzeichnet, dass** wenigstens ein Ende der Rollenkette (11) mit einer Spannschraube (13) gehalten ist.

7. Fluggastbrückenkabine nach Anspruch 5 oder 6, **dadurch gekennzeichnet, dass** im Bereich der Enden der Rollenkette (11) Endlagenschalter für den Antrieb oder Anschläge vorgesehen sind.

8. Fluggastbrückenkabine nach einem der Ansprüche 5 bis 7, **dadurch gekennzeichnet, dass** zwischen Motor (9) und Ritzel (10) eine Rutschkupplung zur Drehmomentbegrenzung geschaltet ist.

9. Fluggastbrückenkabine nach Anspruch 1 , **gekennzeichnet durch** eine Übergangsrampe (26) zum Abdecken der neben dem seitlich verschobenen Boden (4) unter dem Vordach (1) gebildeten Öffnung.

10. Fluggastbrückenkabine nach Anspruch 9, **dadurch gekennzeichnet, dass** die Übergangsrampe (26) außen am Geländer (15) des Bodens (4) ausklappbar angeordnet ist.

11. Fluggastbrückenkabine nach Anspruch 1, **gekennzeichnet durch** eine vor der freien Stirnseite des Bodens (4) angeordnete durchgehende Anlegeschwelle (Bumper) (16) aus einem Profil mit dreieckförmigem Querschnitt.

12. Fluggastbrückenkabine nach Anspruch 1, **dadurch gekennzeichnet, daß** der Boden (4) unterseitig zumindest zwei sich quer zur Öffnung des Vordaches (1) erstreckende Laufschienen (5) für darin eingreifende Tragrollen (6) aufweist, die auf einem längs zur Öffnung des Vordaches (1) schwenkbaren Tragrahmen (28) befestigt sind.

13. Fluggastbrückenkabine nach Anspruch 12, **dadurch gekennzeichnet, daß** der Tragrahmen (28) mittels Scharnieren (29) oder sonstigen geeigneten Lagern an einem etwa auf Kabinenmitte fest an der Brückenkonstruktion anbringbaren Kragträger (30) gelenkig befestigt ist.

14. Fluggastbrückenkabine nach Anspruch 12 oder 13, **dadurch gekennzeichnet, daß** zum Verschwenken des Bodens (4) als Verstellantrieb (31) ein an dem Tragrahmen (28) sowie an einer Konsole (32) gelenkig befestigter mechanischer Spindelantrieb oder ein hydraulischer Zug/Druck-Zylinder vorgesehen ist.

15. Fluggastbrückenkabine nach Anspruch 12, 13 oder 14 **dadurch gekennzeichnet, daß** am Tragrahmen (28) im Übergangsbereich zwischen Boden (4) und Boden (33) der Brückenkonstruktion dreieckförmige Übergangsrampen (34, 35) derart gelenkig befestigbar sind, daß sie eine seitliche Verschiebung des Bodens (4) nicht behindern.

## Claims

1. A telescopic gangway cabin with a canopy roof (1) and a floor (4) extending over the entire width of said canopy roof (1), said floor having a railing (15) in the area of a lateral edge, **characterized in that** the floor (4) is undivided and, together with said railing (15), can be displaced transversely to the opening of said canopy roof (1) under its side wall (2).

2. A telescopic gangway cabin in accordance with claim 1, **characterized in that** on its underside, said floor (4) has at least two running rails (5) extending transversely to the opening of said canopy roof (1) for support rollers (6) which engage into them and which can be mounted on spars (7, 8) of the gangway structure.

3. A telescopic gangway cabin in accordance with claim 2, **characterized in that** with said floor (4) retracted, one of said spars (7) is arranged approximately in the center under said floor (4) and that another spar (8) is arranged in the area of the edge of said floor (4), which edge is free from railing at the side.

4. A telescopic gangway cabin in accordance with claim 1, **characterized in that** a drive for lateral displacement is allocated to said floor (4).

5. A telescopic gangway cabin in accordance with claim 4, **characterized in that** a motor (9) fastened to said spar (7) is provided as a drive, which engages with a pinion (10) into a roller chain (11), the two ends of which are fastened in the area of the lateral edges of said floor (4).

6. A telescopic gangway cabin in accordance with claim 5, **characterized in that** at least one end of said roller chain (11) is held by a tensioning screw (13).

7. A telescopic gangway cabin in accordance with claim 5 or 6, **characterized in that** limit position switches for the drive or stops are provided in the area of the ends of said roller chain (11).

8. A telescopic gangway cabin in accordance with any of claims 5 to 7, **characterized in that** a slip clutch for torque limitation is inserted between said motor (9) and said pinion (10).

9. A telescopic gangway cabin in accordance with claim 1, **characterized by** a transition ramp (26) to cover the opening formed next to said, laterally displaced floor (4) under said canopy roof (1).

10. A telescopic gangway cabin in accordance with claim 9, **characterized in that** said transition ramp (26) is arranged as a fold-out ramp on the outside at said railing (15) of said floor (4).

11. A telescopic gangway cabin in accordance with claim 1, **characterized by** a continuous contact threshold (bumper) (16) comprised of a profile with a triangular cross section, which is arranged in front of the free front side of said floor (4).

12. A telescopic gangway cabin in accordance with claim 1, **characterized in that** on its underside, said floor (4) has at least two running rails (5) extending transversely to the opening of said canopy roof (1) for support rollers (6), which engage into them and which are fastened to a support frame (28) pivotable along the opening of said canopy roof(1).

13. A telescopic gangway cabin in accordance with claim 12, **characterized in that** said support frame (28) is fastened in an articulated manner to a cantilever beam (30) rigidly mountable to the gangway structure approximately in the middle of the cabin by means of hinges (29) or other suitable bearings.

14. A telescopic gangway cabin in accordance with claim 12 or 13, **characterized in that** a mechanical spindle drive or an hydraulic pull-push cylinder fastened in an articulated manner to said support frame (28) as well as to a bracket (32) is provided as an adjusting drive (31) to pivot said floor (4).

15. A telescopic gangway cabin in accordance with claim 12, 13, or 14, **characterized in that** triangular transition ramps (34,35) can be fastened in an articulated manner to said support frame (28) in the transition area between said floor (4) and the floor (33) of the gangway structure such that they do not hamper the lateral displacement of said floor (4).

## Revendications

1. Cabine de passerelle pour les passagers d'un avion avec un auvent (1) et un plancher (4) en une partie qui s'étend sur toute la largeur de l'auvent (1), **caractérisée en ce que** le plancher (4) présente un garde-corps (15) dans la zone d'un bord latéral et peut être déplacé avec le garde-corps (15) transversalement à l'ouverture de l'auvent (1) sous sa paroi latérale (2).

2. Cabine de passerelle pour les passagers d'un avion selon la revendication 1, **caractérisée en ce que** le plancher (4) possède sur sa face inférieure au moins deux rails de roulement (5) qui se déploient transversalement à l'ouverture de l'auvent (1) pour des rouleaux porteurs (6) prenant dans lesdits rails de roulement et étant fixés sur des longerons (7, 8) du portique.

3. Cabine de passerelle pour les passagers d'un avion selon la revendication 2, **caractérisée en ce que,** le plancher étant escamoté, un des longerons (7) est approximativement centré sous le plancher (4) et un autre longeron (8) disposé dans la zone du bord latéral du plancher (4) qui n'est pas muni de garde-corps.

4. Cabine de passerelle pour les passagers d'un avion selon la revendication 1, **caractérisée en ce qu'**un dispositif d'entraînement est affecté au plancher (4) pour permettre le déplacement latéral.

5. Cabine de passerelle pour les passagers d'un avion selon la revendication 4, **caractérisée en ce que** le dispositif d'entraînement prévu est un moteur (9) fixé à un longeron (7), ledit moteur s'engrenant au moyen d'un pignon (10) dans une chaîne à rouleaux (11) dont les deux extrémités sont fixées dans la zone des bords latéraux du plancher (4).

6. Cabine de passerelle pour les passagers d'un avion selon la revendication 5, **caractérisée en ce qu'au** moins une extrémité de la chaîne à rouleaux (11) est maintenue à l'aide d'une vis de serrage (13).

7. Cabine de passerelle pour les passagers d'un avion selon la revendication 5 ou 6, **caractérisée en ce que** des commutateurs de fin de course pour le dispositif d'entraînement ou des butées sont prévus au niveau des extrémités de la chaîne à rouleaux (11).

8. Cabine de passerelle pour les passagers d'un avion selon une des revendications 5 à 7, **caractérisée en ce qu'**un accouplement à friction est monté entre le moteur (9) et le pignon (10) pour la limitation du couple.

9. Cabine de passerelle pour les passagers d'un avion selon la revendication 1, **caractérisée par** une rampe de transition (26) destinée à recouvrir l'ouverture formée à côté du plancher (4) déplacé latéralement sous l'auvent (1).

10. Cabine de passerelle pour les passagers d'un avion selon la revendication 9, **caractérisée en ce que** la rampe de transition (26) est aménagée à l'extérieur sur le garde-corps (15) du plancher (4) d'où elle peut être déployée.

11. Cabine de passerelle pour les passagers d'un avion selon la revendication 1, **caractérisée par** un seuil d'abordage (butoir (16) continu, disposé devant le front avant libre du plancher (4) et constitué d'un profil avec section triangulaire.

12. Cabine de passerelle pour les passagers d'un avion selon la revendication 1, **caractérisée en ce que** le plancher (4) présente sur sa face inférieure au moins deux rails de roulement (5) qui se déploient transversalement à l'ouverture de l'auvent (1) pour des rouleaux porteurs (6) prenant dans lesdits rails et étant fixés sur un cadre porteur (28) orientable le long de l'ouverture de l'auvent (1).

13. Cabine de passerelle pour les passagers d'un avion selon la revendication 12, **caractérisée en ce que** le cadre porteur (28) est articulé à l'aide de charnières (28) ou autres paliers appropriés à une poutre en porte-à-faux (30) pouvant être installée de manière fixe au portique à peu près au milieu de la cabine.

14. Cabine de passerelle pour les passagers d'un avion selon la revendication 12 ou 13, **caractérisée en ce qu'**une commande à broche mécanique articulée au cadre porteur (28) ainsi qu'à une console (32) ou un vérin hydraulique traction-pression sont prévus comme mécanisme de réglage (31) pour pivoter le plancher (4).

15. Cabine de passerelle pour les passagers d'un avion selon la revendication 12, 13 ou 14, **caractérisée en ce que** des rampes de transition triangulaires (34, 35) peuvent être articulées au cadre porteur (28) dans la zone de transition entre le plancher (4) et le plancher (33) du portique de manière telle qu'elles n'empêchent pas un déplacement latéral du plancher (4).
